# EUROPÄISCHE PATENTSCHRIFT

(11) **EP 2 342 106 B1**
(45) Veröffentlichungstag und Bekanntmachung des Hinweises auf die Patenterteilung: **03.04.2013**
(21) Anmeldenummer: 09782432.0
(22) Anmeldetag: 01.09.2009
(51) Int. Cl.: B60T 7/22, B60W 30/08

(54) **VERFAHREN ZUR AUFRECHTERHALTUNG EINES FAHRERUNABHÄNGIGEN BREMSEINGRIFFS NACH EINER KOLLISION**
METHOD FOR MAINTAINING A DRIVER-INDEPENDENT BRAKING INTERVENTION AFTER A COLLISION
PROCÉDÉ DE MAINTIEN D'UNE INTERVENTION DE FREINAGE INDÉPENDANTE DU CONDUCTEUR APRÈS UNE COLLISION

(30) Priorität: 29.10.2008 DE 102008043264
(43) Veröffentlichungstag der Anmeldung: 13.07.2011
(73) Patentinhaber: Robert Bosch GmbH, 70442 Stuttgart (DE)
(72) Erfinder: CETINKAYA, Ferah, 74360 Ilsfeld (DE)
(86) Internationale Anmeldenummer: PCT/EP2009/061246
(87) Internationale Veröffentlichungsnummer: WO 2010/049193

(56) Entgegenhaltungen:
- DE-A1- 19 753 971
- US-A1- 2001 027 372

## Beschreibung

### Stand der Technik

In der DE 197 53 971 A1 werden eine Verfahren und eine Vorrichtung zur Steuerung der Bremsanlage eines Kraftfahrzeugs vorgeschlagen, bei welchem in einer erkannten Kollisionssituation Bremskraft über die Vorgabe des Fahrers hinaus, vorzugsweise bis auf einen maximalen Wert, aufgebaut wird.

Das "Wiener Abkommen über den Straßenverkehr" besagt unter anderem: "Jeder Führer muss dauernd sein Fahrzeug beherrschen oder seine Tiere führen können".

Deshalb kann der vom Fahrer mittels der Fahrpedalbetätigung signalisierte Beschleunigungswunsch nicht ohne weiteres unterdrückt werden.

Die Erfindung betrifft die Situation, dass zum einen infolge einer Kollision aus Sicherheitsgründen ein fahrerunabhängiger Bremskraftaufbau stattfindet, andererseits der Fahrer mittels Betätigung des Fahrpedals einen Beschleunigungswunsch äußert.

### Offenbarung der Erfindung

Die Erfindung betrifft ein Verfahren zur Aufrechterhaltung eines nach einer Kollision fahrerunabhängig durchgeführten Bremseingriffes bei einem Kraftfahrzeug, bei dem
- eine Fahrpedalbetätigung des Fahrers erfasst wird,
- ermittelt wird, ob eine Motormomentbeeinflussung über das Fahrpedal überhaupt ausführbar ist und
- bei ermittelter Ausführbarkeit der Motormomentbeeinflussung der fahrerunabhängige Bremseingriff abgebrochen wird und
- bei ermittelter Nichtausführbarkeit der Motormomentbeeinflussung der fahrerunabhängige Bremseingriff aufrechterhalten bzw. nicht abgebrochen wird. Bei Nichtausführbarkeit der Motormomentbeeinflussung ist der Fahrerwunsch nach Beschleunigung prinzipiell nicht umsetzbar. Deshalb wird in diesem Fall aus Sicherheitsgründen der fahrerunabhängige Bremseingriff aufrechterhalten.

Eine vorteilhafte Ausgestaltung der Erfindung ist dadurch gekennzeichnet, dass es sich bei dem Bremseingriff um eine Notbremsung handelt. Durch die Notbremsung wird wo schnell als möglich versucht, das Fahrzeug zum Stillstand zu bringen, um eventuelle Sekundärkollisionen zu vermeiden.

Eine vorteilhafte Ausgestaltung der Erfindung ist dadurch gekennzeichnet, dass die Motormomentbeeinflussung als nicht ausführbar ermittelt wird, wenn die Energiezufuhr des Antriebsmotors unterbrochen ist.

Eine vorteilhafte Ausgestaltung der Erfindung ist dadurch gekennzeichnet, dass es sich bei der Energiezufuhr des Antriebsmotors um die Kraftstoffzufuhr eines Verbrennungsmotors handelt.

Eine vorteilhafte Ausgestaltung der Erfindung ist dadurch gekennzeichnet, dass die Kraftstoffzufuhr zum Verbrennungsmotor dann als nicht ausführbar ermittelt wird, wenn die Kraftstoffpumpe als abgeschaltet oder defekt detektiert wird.

Eine vorteilhafte Ausgestaltung der Erfindung ist dadurch gekennzeichnet, dass es sich bei der Energiezufuhr des Antriebsmotors um die Versorgung eines Elektromotors mit elektrischer Energie handelt. Ein Erfindung ist sowohl auf konventionelle, mittels eines Verbrennungsmotors angetriebene Fahrzeuge als auch auf Elektrofahrzeuge oder Hybridfahrzeuge anwendbar.

Eine vorteilhafte Ausgestaltung der Erfindung ist dadurch gekennzeichnet, dass bei Durchführung der Motormomentbeeinflussung über das Fahrpedal der fahrerunabhängige Bremseingriff abgebrochen wird. Hier wird dem Erfordernis Rechnung getragen, dass der Fahrer stets die Kontrolle über sein Fahrzeug haben soll, d.h. eine Überstimmung eines umsetzbaren Fahrerwunsches findet nicht statt.

Eine vorteilhafte Ausgestaltung der Erfindung ist dadurch gekennzeichnet, dass es sich bei der Motormomentbeeinflussung um eine Motormomenterhöhung handelt.

Weiter umfasst die Erfindung eine Vorrichtung, enthaltend Mittel, die zur Durchführung der vorstehend beanspruchten Verfahren ausgestaltet sind.

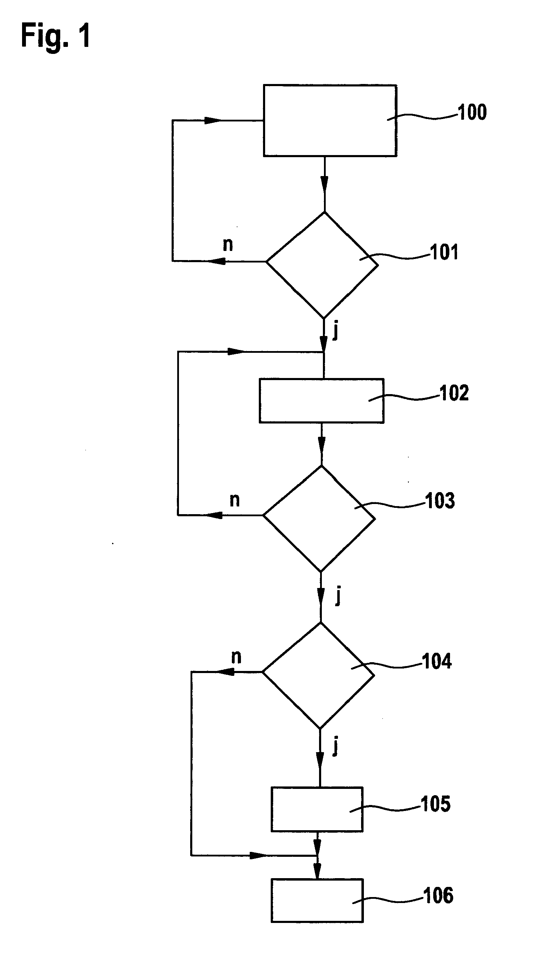

Die Zeichnung umfasst Figur 1. In Figur 1 ist der Ablauf einer Ausführungsform des erfindungsgemäßen Verfahrens dargestellt.

Bei Untersuchungen mittels Probanden wurde das Vorliegen einer Kollision mittels eines plötzlichen fahrerunabhängigen Eingriffs durch eine aktive Lenkung simuliert. Dabei hat sich gezeigt, dass ein Großteil der Fahrer nach der simulierten Kollision versehentlich das Fahrpedal anstelle des Bremspedals betätigt haben.

Das "Wiener Abkommen über den Straßenverkehr" besagt unter anderem: "Jeder Führer muss dauernd sein Fahrzeug beherrschen oder seine Tiere führen können".

Deshalb kann der vom Fahrer mittels der Fahrpedalbetätigung signalisierte Beschleunigungswunsch nicht ohne weiteres unterdrückt werden. Sinnvollerweise wird bei einer die Fahrpedalbetätigung durch den Fahrer nach einer Kollision auch eine durch die Kollision aktivierter Notbremseingriff bzw. Bremsassistenteneingriff abgebrochen, um nicht das vom Fahrerwunsch herrührende Beschleunigungsmoment gegen die Bremsmomente arbeiten zu lassen.

In zahlreichen Situationen ist jedoch nach einer Kollision eine Fahrzeugbeschleunigung nicht mehr möglich, weil beispielsweise die Kraftstoffzufuhr bzw. Energiezufuhr zum Antriebsmotor unterbrochen ist. Dies kann durch eine Abschaltung der Kraftstoffpumpe oder durch einen Ausfall des Einspritzsystems bewirkt sein.

Deshalb wird erfindungsgemäß der nach der Kollision fahrerunabhängig aktivierte Bremseingriff in denjenigen Fällen nicht zurückgenommen, in denen der mittels der Betätigung des Fahrpedals vom Fahrer geäußerte Beschleunigungswunsch technisch nicht mehr umsetzbar ist, z.B. infolge der Unterbrechung der Kraftstoffzufuhr zum Verbrennungsmotor oder im Falle eines elektroangetriebenen Fahrzeugs infolge der Unterbrechung der Stromzufuhr zum Antriebsmotor.

Der Ablauf des erfindungsgemäßen Verfahrens ist in Fig. 1 dargestellt. Nach dem Start in Block 100 wird in Block 101 abgefragt, ob eine Kollision stattgefunden hat. Hat keine Kollision stattgefunden, dann wird zu Block 100 zurückgegangen. Hat jedoch eine Kollision stattgefunden, dann wird in Block 102 ein fahrerunabhängiger Bremseingriff durchgeführt. Anschließend wird in Block 103 ermittelt, ob eine Fahrpedalbetätigung durch den Fahrer stattfindet.

Betätigt der Fahrer nicht das Fahrpedal, dann wird zu Block 102 zurückgegangen und der fahrerunabhängige Bremseingriff wird weitergeführt. Wird in Block 103 jedoch eine Gas- bzw. Fahrpedalbetätigung durch den Fahrer detektiert, dann wird in Block 104 abgefragt, ob eine Motormomentbeeinflussung bzw. Motormomenterhöhung über das Fahrpedal überhaupt durchführbar ist. Ist eine Motormomentbeeinflussung nicht durchführbar, dann wird direkt zu Block 106 gegangen, in welchem das Verfahren endet, d.h. der fahrerunabhängige Bremseingriff wird nicht zurückgenommen und wird fortgeführt.

Ist eine Motormomentbeeinflussung jedoch durchführbar, dann wird in Block 105 der fahrerunabhängige Bremseingriff beendet und anschließend endet in Block 106 das Verfahren.

## Patentansprüche

1. Verfahren zur Aufrechterhaltung eines nach einer Kollision fahrerunabhängig durchgeführten Bremseingriffes (102) bei einem Kraftfahrzeug
- bei dem eine Fahrpedalbetätigung des Fahrers erfasst wird (103),
- ermittelt wird, ob eine Motormomentbeeinflussung über das Fahrpedal überhaupt ausführbar ist (104) und
- bei ermittelter Ausführbarkeit der Motormomentbeeinflussung der fahrerunabhängige Bremseingriff abgebrochen wird (105) und
- bei ermittelter Nichtausführbarkeit der Motormomentbeeinflussung der fahrerunabhängige Bremseingriff aufrechterhalten wird (106).

2. Verfahren nach Anspruch 1, **dadurch gekennzeichnet, dass** es sich bei dem Bremseingriff um eine Notbremsung handelt.

3. Verfahren nach Anspruch 1, **dadurch gekennzeichnet, dass** die Motormomentbeeinflussung als nicht ausführbar ermittelt wird (104), wenn die Energiezufuhr des Antriebsmotors unterbrochen ist.

4. Verfahren nach Anspruch 3, **dadurch gekennzeichnet, dass** es sich bei der Energiezufuhr des Antriebsmotors um die Kraftstoffzufuhr eines Verbrennungsmotors handelt.

5. Verfahren nach Anspruch 4, **dadurch gekennzeichnet, dass** die Kraftstoffzufuhr zum Verbrennungsmotor dann als nicht ausführbar ermittelt wird, wenn die Kraftstoffpumpe als abgeschaltet oder defekt detektiert wird.

6. Verfahren nach Anspruch 3, **dadurch gekennzeichnet, dass** es sich bei der Energiezufuhr des Antriebsmotors um die Versorgung eines Elektromotors mit elektrischer Energie handelt.

7. Verfahren nach Anspruch 1, **dadurch gekennzeichnet, dass** bei Durchführung der Motormomentbeeinflussung über das Fahrpedal der fahrerunabhängige Bremseingriff abgebrochen wird.

8. Verfahren nach Anspruch 1, **dadurch gekennzeichnet, dass** es sich bei der Motormomentbeeinflussung um eine Motormomenterhöhung handelt.

9. Vorrichtung, enthaltend Mittel, die zur Durchführung der vorstehend beanspruchten Verfahren ausgestaltet sind.

## Claims

1. Method for maintaining a braking intervention (102) carried out independently of the driver after a collision in a motor vehicle,
- in which actuation of an accelerator pedal by the driver is sensed (103),
- it is determined whether it is at all possible to influence the engine torque by means of the accelerator pedal (104), and
- when it is determined that the engine torque can be influenced, the driver-independent braking intervention is aborted (105), and
- when it is determined that the engine torque cannot be influenced, the driver-independent braking intervention is maintained (106).

2. Method according to Claim 1, **characterized in that** the braking intervention is an emergency braking operation.

3. Method according to Claim 1, **characterized in that** it is determined that the engine torque cannot be influenced (104) if the supply of energy to the drive engine is interrupted.

4. Method according to Claim 3, **characterized in that** the supply of energy to the drive engine comprises supplying an internal combustion engine with fuel.

5. Method according to Claim 4, **characterized in that** it is determined that fuel cannot be supplied to the internal combustion engine if the fuel pump is detected as being switched off or defective.

6. Method according to Claim 3, **characterized in that** the supply of energy to the drive engine comprises supplying an electric motor with electrical energy.

7. Method according to Claim 1, **characterized in that**, when the engine torque is influenced by means of the accelerator pedal, the driver-independent braking intervention is aborted.

8. Method according to Claim 1, **characterized in that** the influencing of the engine torque comprises increasing the engine torque.

9. Device containing means which are configured to carry out the methods claimed above.

## Revendications

1. Procédé de maintien d'une intervention de freinage (102) réalisée indépendamment d'un conducteur après une collision dans un véhicule automobile, où :
- on détecte un actionnement de pédale par le conducteur (103) ;
- on détermine si on peut influencer le couple moteur via la pédale (104) ; et
- si cette influence du couple moteur est possible, on interrompt l'intervention de freinage indépendante du conducteur (105) ; et
- si cette influence du couple moteur est impossible, on maintient l'intervention de freinage indépendante du conducteur (106).

2. Procédé selon la revendication 1, **caractérisé en ce que** l'intervention de freinage est un freinage d'urgence.

3. Procédé selon la revendication 1, **caractérisé en ce que** l'on détermine que l'influence du couple moteur n'est pas possible (104) lorsque l'apport d'énergie du moteur d'entraînement est interrompu.

4. Procédé selon la revendication 3, **caractérisé en ce que** l'apport d'énergie du moteur d'entraînement correspond à l'alimentation en carburant d'un moteur à combustion interne.

5. Procédé selon la revendication 4, **caractérisé en ce que** l'alimentation en carburant du moteur à combustion interne est déterminée comme impossible lorsque l'on détecte que la pompe à carburant est déconnectée ou défectueuse.

6. Procédé selon la revendication 3, **caractérisé en ce que** l'alimentation en énergie du moteur d'entraînement correspond à l'alimentation en énergie électrique d'un moteur électrique.

7. Procédé selon la revendication 1, **caractérisé en ce qu'**en cas d'influence du couple moteur par le biais de la pédale, l'intervention de freinage indépendante du conducteur est interrompue.

8. Procédé selon la revendication 1, **caractérisé en ce que** l'influence du couple moteur correspond à une augmentation du couple moteur.

9. Dispositif, contenant des moyens conçus pour mettre en oeuvre le procédé revendiqué dans les revendications précédentes.
